Europäisches Patentamt

(19) European Patent Office

Office européen des brevets

(11) Publication number: **0 113 693**

**A1**

(12) **EUROPEAN PATENT APPLICATION**

(21) Application number: **84300043.1**

(22) Date of filing: **05.01.84**

(51) Int. Cl.³: **H 04 M 15/30**
**G 06 F 15/02**

(30) Priority: **06.01.83 IT 6700583**

(43) Date of publication of application:
**18.07.84 Bulletin 84/29**

(84) Designated Contracting States:
**DE FR GB**

(71) Applicant: **Ing. C. Olivetti & C., S.p.a.**
**Via G. Jervis 77**
**I-10015 Ivrea (Turin)(IT)**

(72) Inventor: **Castellano, Pietro**
**Via Piccoli 32**
**I-10081 Castellamonte (TO)(IT)**

(72) Inventor: **Ceresa, Luciano**
**Via V Emanuele 37/1**
**I-10010 Albiano (TO)(IT)**

(72) Inventor: **Parisi, Riccardo Baroetto**
**Via Scialoja 22 Bis**
**I-10100 Turin(IT)**

(72) Inventor: **Colombo, Walter**
**Via Dante 113**
**I-28047 Oleggio (NO)(IT)**

(74) Representative: **Pears, David Ashley et al,**
**REDDIE & GROSE 16 Theobalds Road**
**London WC1X 8PL(GB)**

(54) **Computing machine with telecommunications device.**

(57) The computing machine comprises a keyboard (51, 52) for the input of data and the functions to be performed, a computing unit (60), a display device (54) and a printer (55). The machine also incorporates a microphone (56) and a loudspeaker (57) for telephonic communications, a clock calendar unit (81) and a telephone interface (83) enabling both voice communication and data communication. A telephone number may be called using the keyboard (51, 52) or using keys (53) which access pre-recorded telephone numbers held in a RAM (71). The printer (55) can record a called telephone number, the time and date of making the call and the elapsed time of the call measured by the clock unit (81). The RAM (71) can also be used for storing appointments and messages which are pre-recorded on the machine or which arrive from a similar machine connected thereto over a telephone line (84).

FIG.4

# COMPUTING MACHINE WITH TELECOMMUNICATIONS DEVICE

The present invention relates to a computing machine comprising a keyboard for the input of data and the functions to be performed, a computing unit connected to the keyboard, a display device and a printer connected to the computing unit, and an electronic clock. The machine may be what is normally referred to as a calculator or a personal computer.

The object of the present invention is to provide a computing machine which, besides the normal arithmetic functions is capable also of performing telephone and/or telecommunication functions and which, when required, is also capable of printing the more significant data of the telephone conversations carried on. This object is met by the computing machine according to the invention, which is characterised by incorporating a telephonic interface unit connected to the computing unit and to the electronic clock, and in that the printer is operable for selectively printing the selected telephone number, the time and the date of the telephone conversation and the elapsed time of the telephone conversation.

The invention will be described in more detail, by way of example, with reference to the accompanying drawings, in which:

Figure 1 is a plan view of one embodiment of a computing machine according to the invention,

Figure 2 is a block circuit diagram of the logic circuit of the machine shown in Figure 1,

Figure 3 is a plan view of another embodiment of a computing machine according to the invention, and

Figure 4 is a block circuit diagram of the logic circuit of the machine shown in Figure 3.

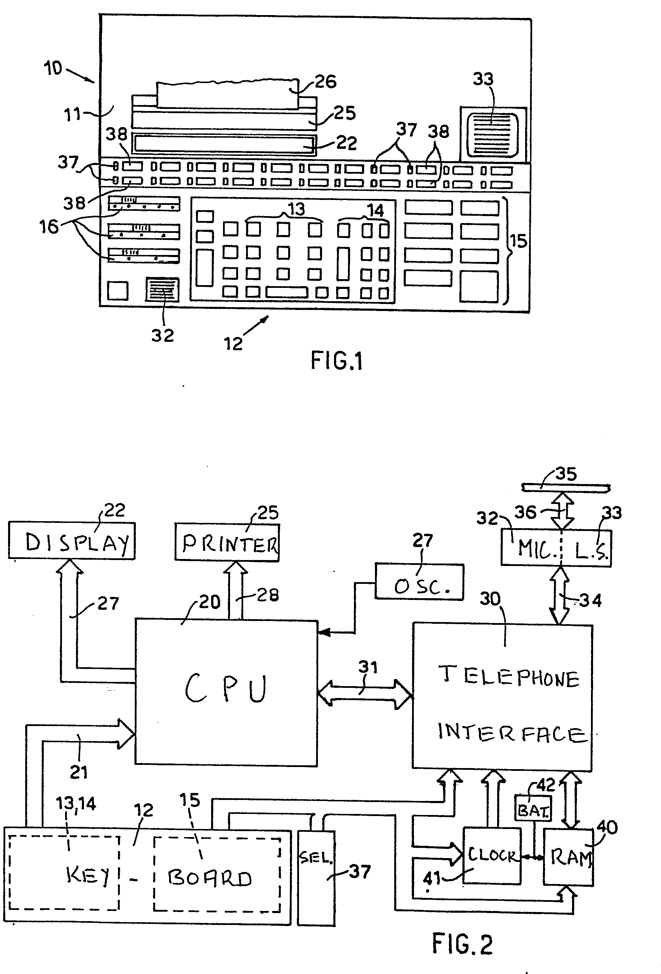

Referring to Figure 1, a computing machine 10, a first embodiment of the invention, comprises a support structure 11, on the front part of which are mounted a keyboard 12 comprising a series of numeric keys 13, a series of keys 14 for the input of arithmetic functions, a series of keys 15 for the input of telephone and operating functions, and sliders 16.

The machine further comprises an electronic computing unit (CPU) 20 (see Figure 2) which comprises for example an integrated logic circuit which is known per se and which is not described in detail herein. The CPU 20 is connected to an oscillator 27 and, by means of a data bus 21, to the keyboard 12. A visual display device 22 (see Figure 1) and a printer 25 which is capable of printing graphic symbols and numbers on a strip of paper 26 are connected to the CPU 20 by means of respective data buses 27 and 28 (see Figure 2). The printer 25 which is not described in detail herein may be for example of the type described in our published European patent application EPA 0 036 739. An electronic telephone interface unit 30 which is known per se and which is not described in detail herein is connected to the CPU 20 by means of a data bus 31, to a microphone 32 and to a loudspeaker 33 by means of a conduit 34. In turn, the microphone 32 and the loudspeaker 33 are connected to a line 35 of the telephone system, by means of channel 36.

The microphone 32 and the loudspeaker 33 are mounted on the support structure 11 (see Figure 1) at bottom left and at top right respectively.

Also mounted on the support structure 11 is a plurality of keys 37, each of which is capable of automatically selecting a predetermined telephone number that is pre-recorded in the machine, as will be described hereinafter. In order to facilitate use of the keys 37 for the operator, associated with each key 37 is a label 38 on which can be printed the name of the subscriber to whom the stored telephone number corresponds.

A random access memory (RAM) 40 (see Figure 2) is arranged to store a certain number of telephone numbers and is connected to the telephone interface unit 30, to the keyboard 12 and to the keys 37. Each key 37 is associated with a predetermined area in the memory 40.

An integrated logic circuit 41 which is known per se is provided to perform the clock, chronometer and calendar functions and is connected to the telephone interface unit 30 and to the keyboard 12.

A battery 42 is connected to the memory 40 and to the circuit 41 to keep them in operation even when the machine 10 is not connected to the electrical power supply system.

The machine 10 described hereinbefore is capable of performing functions in respect of computation, telecommunication and display and/or printing of data relating to the time, the day, the month and the year, and selectively printing the most significant data of a telephone conversation, such as the elapsed time of the telephone conversation, the telephone number selected, the time and the date on which the telephone conversation was made.

More particularly, when the machine 10 is switched on and no key is actuated, the data relating to the hour, the minutes, the day and the month are automatically displayed on the display device 22. In that condition, and without the necessity for any other operations, the machine is predisposed to perform computations in the usual manner, with or without the use of the printer 25, and each depressed numeric key 13 will be interpreted as an item of data relating to a computation to be performed; such an item of data is immediately displayed on the display device 22, in place of the data relating to the time and the date, which automatically disppear.

The arithmetic functions are performed by the machine 10 upon depression of the related function keys 14. In particular, the data entered at the keyboard 12 are passed to the CPU 20 and from there to the display device 22 and/or to the printer 25.

The data relating to the time and the date can be selectively displayed and printed at any time, by actuating a RECALL TIME key, among the keys 15. Such data will also automatically appear at the display means 22 if none of the keys of the keyboard 12 is actuated, for a certain number of seconds.

If the machine 10 according to the invention is to be used for carrying out telephone communications, the following procedure is adopted.

A CONFERENCE key among the keys 15 is depressed, thus connecting the telephone interface unit 30, the microphone 32 and the loudspeaker 33 to the telephone line 35. If the telephone line is free, the appropriate sound relating thereto (dialling tone) will be amplified by the loudspeaker 33. A TELEPHONE NUMBER key among the keys 15 is then depressed, thus predisposing the machine to interpret as the digits of the telephone number to be selected, the successive numeric keys which are then actuated. When that operating procedure is carried out, the information displayed at the display device 22 is removed and a predetermined symbol '□' appears on the display device 22, indicating that the machine is predisposed to perform the operation of selecting a telephone number. The preselected telephone number is then keyed in, by actuating the corresponding numeric keys 13 of the keyboard 12; the digits which are thus keyed in appear on the display device 22. If the operator finds that all the digits which appear in the display device 22 precisely correspond to the digits that he wished to enter, he will actuate a key DIAL among the keys 15 and the entered number will be passed to the telephone line 35 for making connection to the dialled telephone.

The telephone number to be dialled, rather than being keyed in digit by digit by means of the keyboard 12, can also be automatically called by actuating one of the keys 37, but only when the telephone number has been previously stored in the memory 40 of the machine.

The following procedure is adopted for storing a telephone number in the memory 40. The key TELEPHONE NUMBER is depressed; the keys 13 of the keyboard 12, which correspond to the digits making up the telephone number to be stored are depressed; a key STORE among the keys 15 is depressed, thereby predisposing the memory 40 to receive the data entered; and finally, one of the selector keys 37 is depressed; that key, being associated with a predetermined region in the memory 40, will address the entered data to that memory region, also erasing any pre-existing data there.

In order to call a telephone number which has been previously put into the memory, rather than adopting the above-described procedure, it will be sufficient, after having depressed the key CONFERENCE and the key TELEPHONE NUMBER, to actuate the key 37 corresponding to the memory region in which the number was stored. That number will appear on the display device 22; in order to pass it to the telephone line 35, the key DIAL is actuated, as in the preceding case.

After the key DIAL has been depressed, and throughout the duration of the telephone communication, it is possible to use the machine 10 for performing computation functions without adopting particular procedures. In addition, by actuating a key MIKE OFF, which is disposed on the keyboard 12 in the vicinity of the microphone 32, the microphone can be temporarily disconnected from the telephone line without the communication itself being interrupted.

On the other hand, the communication is interrupted by actuating a key RESET LINE among the keys 15. In order to disconnect the telephone interface unit 30 from the line 35, the key CONFERENCE is depressed again.

As stated above, the machine 10 according to the invention is also capable of performing chronometer or timing functions. For that purpose, the following procedure is adopted.

A key TIMER among the keys 15 is depressed; that causes any numbers already existing on the display device 22 to disappear, and causes display of the elapsed time in hours, minutes and seconds, as from the moment at which the TIMER key was depressed. Those data disappear from the display means 22 as soon as another key of the keyboard 12 is depressed, but are contained in an internal counter of the circuit 41 and can be easily displayed again and at any time by actuating the RECALL TIME key which in this case does not cause the time and the date to appear, but the value of the timekeeping count which is in progress.

The timekeeping count is stopped when thw TIMER key is depressed a second time.

The RECALL TIME key which, as has been seen above, serves to cause the display device 22 to display the time and the data, or the value of the timekeeping count, if depressed when those data are already present on the display means 22, causes such data to be printed by means of the printer 25. In particular, if the RECALL TIME key is depressed while the display means 22 is displaying the time and the date, that causes printing of the time, date and the day of the month; if it is depressed when the display means 22 is showing a timekeeping count which is in progress, that causes printing of the value of the timekeeping count at the moment at which the key was depressed; if it is depressed when the display device 22 is showing an item of data relating to the end of a timekeeping count, that causes printing of the time and the date when the count was initiated, the time and the date when the count was concluded and the difference between the two times expressed in hours, minutes and seconds. Finally, if the count was made during a telephone communication, actuation of the RECALL TIME key also causes the called telephone number to be printed. In that way, by starting the timekeeping count, by depressing the associated TIMER key, at the beginning of the telephone conversation, and by stopping that count, by again depressing the TIMER key, at the end of the telephone conversation, it is possible, by actuating the RECALL TIME key, as described above, to have printed on the strip of paper 26 the most significant data of the telephone conversation which was carried on. In the machine 10 as described hereinbefore, it is possible to enter and/or up-date data relating to the time and the date, by actuating a SET key, among the keys 15, which causes the time and date information to appear on the display device 22, whereby the data can possibly be changed by actuating the numeric keys 13 of the keyboard 12.

In addition, in order to prevent the machine from being used for telephone purposes by unauthorised persons, there is provision for a special protection procedure. That procedure provides for actuation of a microswitch (not visible in the drawings) disposed on the base on the machine. Actuation of the microswitch permits the authorised operator to enter into the machine a security code number of four digits, as he wishes, by actuating the numeric keys of the keyboard 12. A second actuation of the microswitch puts the machine into the 'protected' condition. Once a security code number has been thus entered, that number must be entered on the keyboard 12 whenever a telephone call is to be made, immediately after having depressed the key TELEPHONE NUMBER and before selecting the required telephone number. If that is not done, the machine does not accept the telephone number which is keyed in, and returns to the pre-existing condition, causing the time and the date to appear on the display means 22.

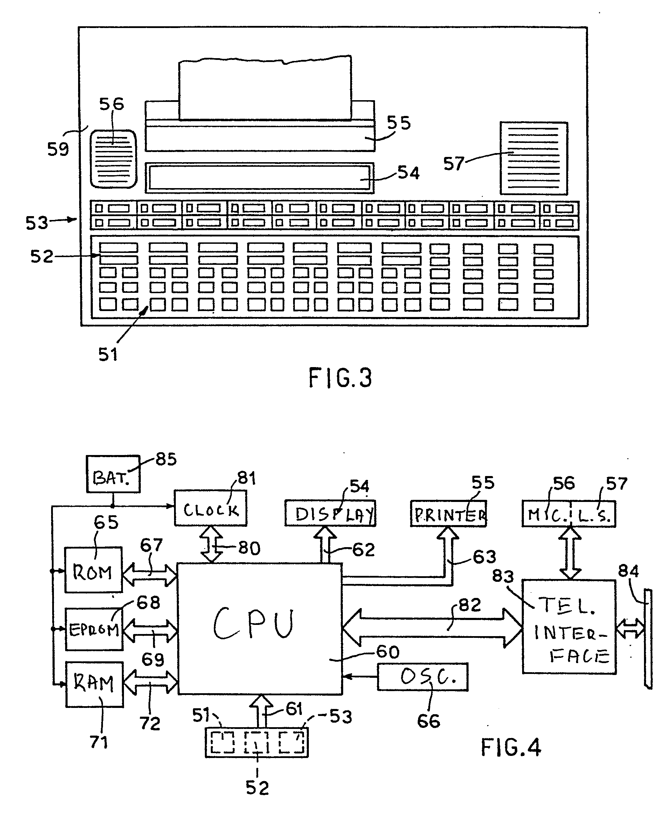

In another embodiment, a computing machine 50 (see Figure 3) according to the invention comprises an alpha-numeric keyboard 51, a plurality of operating keys 52, a series of keys 53 for automatically selecting predetermined, pre-recorded telephone numbers, a display device 54, a printer 55, a microphone 56 and a loudspeaker 57, which are mounted on a support structure 59.

The logic circuit of the machine 50 (see Figure 4) comprises a CPU 60 of known type which is connected to an oscillator 66, to the keyboard 51 and the keys 52 and 53 by means of a data bus 61, to the display device 54 by means of a data bus 62 and to the printer 55 by means of a data bus 63. The CPU 60 is also connected to a read only memory (ROM) 65 by means of a data bus 67, to a programmable memory (EPROM) 68 by means of a data bus 69 and to a random access memory (RAM) 71 by means of a data bus 72. In addition, the CPU 60 is connected by means of a data bus 80 to a known circuit 81 which is arranged to perform time, timekeeping and calendar functions. Finally, the CPU 60 is connected by means of a data bus 82 to a telephone and data transmission interface unit 83 which is also of known type and which is in turn connected to the microphone 56, the loudspeaker 57 and a telephone line 84.

A back-up battery 85 is connected to the circuit 81 and to the memories 65, 68 and 71 to keep them in an operative condition even when the machine 50 is not connected to the electrical power supply system.

The computing machine 50, besides being able to perform the functions already described above with reference to the machine of Figs 1 and 2, is also capable of receiving and transmitting messages to and from units of the same type, which are connected to the telephone line; storing messages to be displayed and/or printed at predetermined times and days or at the operator's request; and storing addresses and telephone numbers. In particular, the various functions of the machine are performed in the following manner.

In the rest condition, with the machine switched on, the time, date and day of the week are continuously displayed on the display device 54. Those data automatically disappear when another key is depressed and return, once again automatically, if no key is depressed, for a certain number of seconds. In addition, such data can be displayed instantly by depressing a DATE key among the keys 52.

In order to perform arithmetic functions, a CALCULATOR key, among the keys 52, has to be depressed in order to predispose the machine 50 accordingly.

By depressing a key AGENDA among the keys 52, the machine 50 is predisposed to put into store appointments, engagements and messages, by means of the alpha-numeric keyboard 51, associated with predetermined times and days, to be automatically displayed on the display device 54 and/or printed by the printer 55 at the required day and time. In addition, after having depressed the key AGENDA, it is possible to cause printing of a list of all the appointments over a certain period of time, in order optionally to cancel or add an appointment.

Messages can also be transmitted by means of the telephone line 84 to a similar machine 50 by depressing a key TRASM. MSG, among the key 52, also at programmed times.

By depressing a key INDEX, among the keys 52, the machine 50 is predisposed to put into store addresses and telephone numbers which can then be automatically called up, displayed and printed by depressing a key SEARCH, among the keys 52, both by names and in alphabetical order.

By depressing a key CALENDAR, among the keys 52, associated with the number of a certain year, the machine prints out the calendar relating to that year.

As regards telephone and chronometric or timekeeping functions, they are the same as described in regard to the machine 10 and are not repeated here.

- 10 -

CLAIMS

1. A computing machine comprising a keyboard (12; 51, 52) for the entry of data and functions to be performed, a computing unit (20; 60) connected to the keyboard, a display device (22; 54) and a printer (25; 55) which are connected to the computing unit, and an electronic clock (41; 81), characterised by a telephone interface unit (30, 83) connected to the computing unit (20; 60) and to the clock (41; 81) and in that the printer (55) is operable for selectively printing the selected telephone number, the time of the telephone call and the elapsed time of the telephone communication.

2. A machine according to claim 1, comprising a single support structure (11; 59) carrying the keyboard (12; 51, 52) the display device (22; 54) and the printer (25; 55), characterised in that the said structure (11; 59) also incorporates a microphone (32; 56) and a loudspeaker (33; 57) which are connected to the telephone interface unit (30; 83).

3. A machine according to claim 1 or 2, characterised in that the keyboard (51, 52) is of alpha-numeric type and is connected to a memory (71) which is capable of storing appointments and/or messages and which is connected to the display device (54), the printer (55) and the electronic clock (81), whereby the messages and/or appointments may be selectively printed and/or displayed at predetermined times and/or upon actuation of predetermined keys of the keyboard.

FIG.1

FIG.2

FIG.3

FIG.4

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-4 264 956 (DELANEY)<br>* Column 4, line 20 - column 6, line 59; figures * | 1,2 | H 04 M  15/30<br>G 06 F  15/02 |
| P,X | US-A-4 404 433 (WHEELER)<br>* Column 1, line 55 - column 11, line 2; figures * | 1,2 | |
| A | US-A-3 999 050 (PITRODA)<br>* Column 4, line 2 - column 17, line 16; figures * | 3 | |
| A | IBM TECHNICAL DISCLOSURE BULLETIN, vol. 19, no. 7, December 1976, pages 2419-2423, Armonk, US<br>H.P. HUBBARD: "Personal computer"<br>* Whole article * | 3 | **TECHNICAL FIELDS SEARCHED (Int. Cl. ³)**<br><br>H 04 M<br>G 06 F |

The present search report has been drawn up for all claims

| Place of search | Date of completion of the search | Examiner |
|---|---|---|
| THE HAGUE | 09-04-1984 | KEPPENS P.M.R. |